# EUROPEAN PATENT APPLICATION

(11) **EP 0 669 588 A2**
(43) Date of publication of application: **30.08.1995**
(21) Application number: 95420034.1
(22) Date of filing: 16.02.1995
(51) Int. Cl.: G06F 17/60, G06T 1/20

(54) **A real-time demand-driven imaging architecture**

(30) Priority: 28.02.1994 US 202534
(71) Applicant: EASTMAN KODAK COMPANY, Rochester, New York 14650-2201 (US)
(72) Inventor: Cok, Ronald S., c/o Eastman Kodak Co., Rochester, New York 14650-2201 (US); Knowles, Daniel B., c/o Eastman Kodak Co., Rochester, New York 14650-2201 (US); Neamtu, Horia, c/o Eastman Kodak Co., Rochester, New York 14650-2201 (US)
(74) Representative: Boulard, Denis

(57) **Abstract**

A network-and-storage based imaging system is composed of an input subsystem of acquisition nodes and processing nodes which respond in real-time to external triggers to capture of images for input to the image archive, and a user-interactive output subsystem of demand nodes and output devices which are demand-driven in response to user commands. A computing device at each of the processing and demand nodes, and a network connecting all of the nodes allow each node to interact with other nodes on the network. The output subsystem includes demand computers different from the image processing computers, whereby the image processing computers need not be available for demand functions and are thereby available for real-time input. The image archive includes a plurality of memory storage devices; and the output has access to all of the memory storage devices.

## Description

### BACKGROUND OF THE INVENTION

### Technical Field

This invention relates generally to real-time, digital imaging systems, and combines an input subsystem which responds to real time external events for image capture and an output subsystem which is demand driven.

### Background Art

There are two general types of digital image processing systems. In one of the types, an input device, such as a video or CCD-based camera, is used to acquire images at either fixed intervals or on demand such as when triggered by an external signaling device. This type of image processing system is referred to herein as a "real-time" system. Images must be accommodated at their arrival rate. An example of a real-time system is a digital inspection system for printed circuit board assembly.

A second type of digital image processing system is highly interactive, and responds to user commands to process images which have typically been stored in memory, such as on magnetic medium. This type of image processing system is referred to herein as a "demand-driven" system. While the system does have bandwidth limitations, output is not real-time, as the user is able to wait for the images. An example of such a system is a digital paint system.

Generally digital imaging systems include acquisition, processing, and storage capabilities, and are often used as part of a computer system. Automated systems require a minimum level of performance to meet the system specifications. Enhancing a system's performance typically involves replacing components with higher cost modules. Demand-driven, user interactive systems are more flexible in their performance requirements and do not have fixed, real-time constraints. In both cases, if the systems are computer network based, they can sometimes be expanded by adding multiple units to expand either performance or the number of supported users. Because these systems are generally used in environments which change their requirements frequently, it is crucial that they be easily re-configured to meet changing needs.

Networking systems also make it straightforward to add multiple, heterogeneous units to larger systems. As long as a device can support the network communication protocol, it can be incorporated into a network. With appropriate programming, these devices can be made part of a digital imaging system.

Network traffic is a significant problem in any networked system, but this is especially true in imaging systems because the images require so much data. Because the network resources are finite in any real system, any particular imaging system must take great care to optimize the use of the available bandwidth in such a way that any demand-driven or real-time requirements are met without degrading performance.

### DISCLOSURE OF THE INVENTION

It is an object of the present invention to provide a system architecture which provides an efficient, scalable structure which supports real-time input requirements and demand-driven output, and which supports a wide variety of configuration needs within the same architecture.

It is another object of the present invention to provide an imaging system architecture which provides an efficient, scalable method for the acquisition, processing, and storage in real-time for an externally triggered input.

It is still another object of the present invention to provide such an architecture wherein subsystems are organized in such a way as to provide system expandability without restricting system accessibility for either input or output.

These objects are achieved by a network-and-storage based imaging system which is composed of an image archive, processing nodes, acquisition nodes, demand nodes, and output devices. Multiple acquisition nodes serve each processing node, and multiple processing nodes serve the archive. Multiple demand nodes request data from the archive, and each demand node supports multiple output devices.

According to a feature of the present invention, a computer network-and-storage based digital imaging architecture includes an image archive, an input subsystem of acquisition nodes and processing nodes which respond in real-time to external triggers to capture of images for input to the image archive, and a user-interactive output subsystem of demand nodes and output devices which are demand-driven in response to user commands.

According to another feature of the present invention, the imaging architecture further includes a computing device at each of the processing and demand nodes. A computer network connects all of the nodes, whereby the computing devices allow each node to interact with other nodes on the network.

In a preferred embodiment, the input subsystem includes image processing computers, and the output subsystem includes demand computers which are possibly different from the image processing computers, whereby the image processing computers need not be available for demand functions and are thereby available for real-time input. The image archive includes a plurality of memory storage devices; and the output has access to all of the memory storage devices.

According to yet another feature of the present invention, at least one of the processing nodes is served by multiple acquisition nodes, and the image archive is served by multiple processing nodes. A plurality of demand nodes are adapted to request image data from the image archive, and each demand node provides image data to multiple output devices.

The invention, and its objects and advantages, will become more apparent in the detailed description of the preferred embodiments presented below.

### BRIEF DESCRIPTION OF THE DRAWINGS

In the detailed description of the preferred embodiments of the invention presented below, reference is made to the accompanying drawings, in which:
Figure 1 is a schematic illustration of the architecture hierarchies of a network-and-storage based digital imaging system according to a preferred embodiment of the present invention;
Figure 2 is a schematic illustration of the logical system structure of the network-and-storage based digital imaging system of Figure 1; and
Figure 3 is a schematic illustration of a portion of a preferred implementation of the imaging system of Figure 2.

### BEST MODE FOR CARRYING OUT THE INVENTION

The present description will be directed in particular to elements forming part of, or cooperating more directly with, apparatus in accordance with the present invention. It is to be understood that elements not specifically shown or described may take various forms well known to those skilled in the art. While the invention is described below in the environment of a digital imaging system architecture, it will be noted that the invention can be used with other types of system architectures.

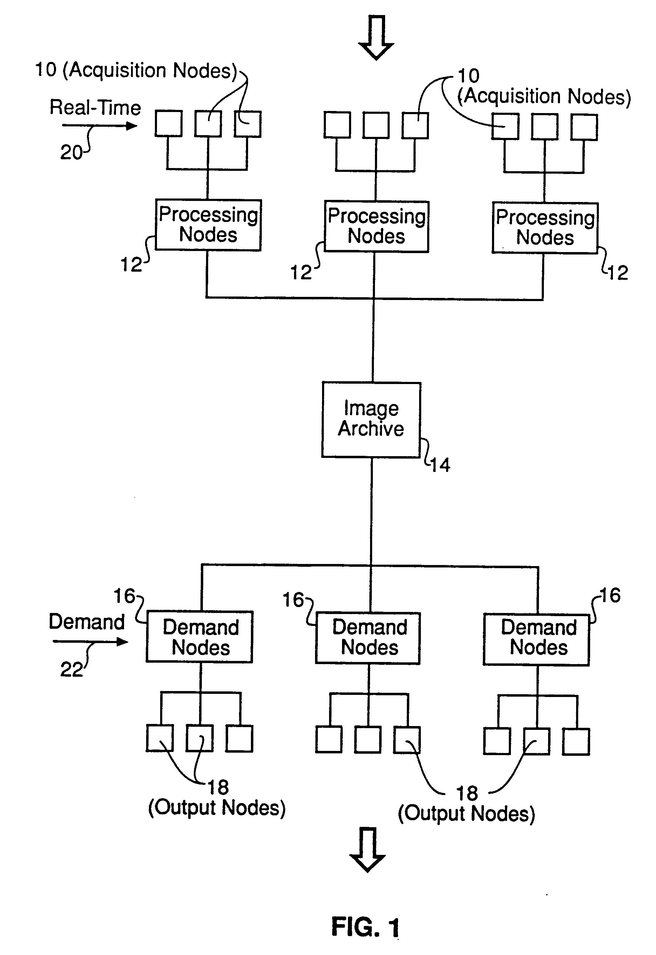

Figure 1 shows hierarchies of a computer network-and-storage based digital imaging architecture which will support real-time inputs and demand-driven outputs for a wide variety of performance requirements. The architecture includes an inverted input hierarchy of image acquisition nodes 10 and processing nodes 12 providing data to an image archive 14. Each processing node may be served by multiple acquisition nodes, and the archive may be served by multiple processing nodes, as illustrated. A plurality of demand nodes 16 may request image data from the image archive, and each demand node provides image data to multiple output devices 18. A computer network connects the various nodes, as each node contains a computing device which allows it to interact with other nodes on the network.

Each acquisition node 10 is connected to one processing node 12, as shown in the second hierarchy layer. Each processing node 12 may have a different number of acquisition nodes, depending on the available technology. There is no fundamental architectural limit to the number of processing nodes; or the number of acquisition nodes connected to each processing node. All processing nodes 12 are connected to a single image archive 14, although the size of the archive may be variable. These three layers: acquisition, processing, and archival, comprise the inverted input hierarchy.

The output hierarchy is composed of the lower three layers illustrated in Figure 1. Image archive 14 is the first layer of the output hierarchy, demand nodes 16 are the second layer, and output nodes 18 are the third. Again, the number of nodes at the second and third output hierarchy layers is variable, and will depend on the particular application and the available technology.

Data flowing from acquisition and processing nodes 10 and 12, respectively, are consolidated in image archive 14 and then inputted to output devices 18 through demand nodes 16. Arrows 20 and 22, shown on the left of the diagram, represent external control signals, also referred to as "trigger signals." Note that acquisition nodes 10 are subject to real-time trigger signals. These trigger signals specify when the acquisition devices are to activate. Each acquisition node 10 may have a different trigger signal. These trigger signals originate externally to the imaging system architecture, and are completely outside the control of the architecture.

External control signals 22 are demands for data from archive 14. These demands originate external to the system, in that they originate outside of the system. The demands may be operator or machine initiated as inputs to computers at demand nodes 16. The inputs may have some fairly flexible real-time requirements associated with them, such as a requirement for a response within a predetermined time period. Demand nodes 16 are responsible for acquiring external control signals 22, doing any output processing necessary, and passing the processed image data to the correct output device 18.

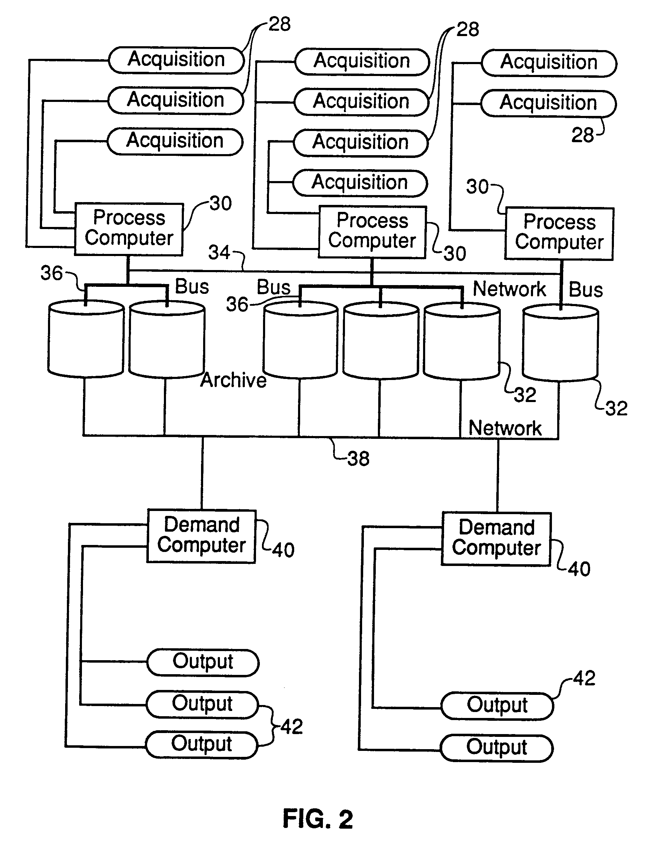

While Figure 1 illustrates the hierarchies of the imaging architecture, Figure 2 illustrates the logical system structure of the network-and-storage based digital imaging system of Figure 1. Acquisition nodes 10 of Figure 1 are shown in Figure 2 as acquisition devices 30 connected either by individual busses or by simple networks to input processing computers 32, which correspond to processing nodes 12 of Figure 1. For example, the left-most group of acquisition devices 28 uses separate busses to connect to the corresponding processing computer 30, the middle group of acquisition devices 28 uses two busses with two acquisition devices on each, while the third group uses one bus for both devices. The choice of interconnection is arbitrary within this architecture and is driven by cost, performance, and complexity considerations. The number and type of acquisition devices is likewise constrained by cost and the available technology.

Each processing computer 30 is responsible for any necessary processing of the input images. Since the types of acquisition devices and of the connections to the processing computers can vary, the processing computers themselves must provide suitable flexibility for their support. Because the input data rates and activities themselves are controlled by real-time external control signals 20 of Figure 1, the processing computers must also provide adequate computing power to support the needs of the devices connected to them. Note that these needs may vary from processing computer to processing computer as the number and type of acquisition devices connected to them vary. The processing computers themselves may differ to support varying output needs.

An image archive receives data from the processing computers, and acts as a central buffer and clearing house for the larger system. Since the capacity of reasonably priced, commercially available individual storage devices is limited, provision has been made in the illustrated embodiment of the present invention for multiple storage devices 32 interconnected over a network 34.

Separate storage devices are shown for each processing computer 30, connected to the processing computer over a bus system 36. This is not absolutely essential, since networked processing computers can write to storage devices connected to another processing computer. However, by physically dividing the storage devices in this way, the network traffic is reduced and the input constraints are further de-coupled from the output requirements.

It is also not essential that the storage devices 32 associated with a particular processing computer 30 be directly connected to that processing computer's bus 36. The same object of reducing network traffic can be met by providing means for each processing computer to store data on a subset of the image archive storage devices. This could be, for example, a local bus (as illustrated) or a special network connection to an intelligent storage device, not shown.

Image archive storage devices 32 are accessible over a second network 38 as a single logical device, so that any one of a plurality of demand computers 40 can access image data from any storage device, as necessary. In this way, the image archive serves to de-couple the real-time, trigger-driven image input system requirements from the demand-driven output requirements.

The storage capacity of the archive limits the extent to which this de-coupling is possible. It can, however, be extended virtually without limit by increasing the number of storage devices. The input capacity is limited by the private communication channel driving each group of storage devices. Since many groups of storage devices can be created (limited only by the data rates from a single processing computer), the input data rate achievable is also unlimited. However, since the archive appears to the output subsystem demand computers as a single, logical entity accessible through a common channel (network 38), and since that common channel has finite bandwidth, the network bandwidth limits the performance of the output system.

Demand computers 40 treat the image archive as a single large storage device available over the network. As external requests for information arrive, the demand computers access the needed data and present it to one of a plurality of output devices 42. These output devices can be different from one another, as the only restriction is that the demand computers must be capable of supporting any processing needs of the associated output devices at the performance level required. Since requests made at the demand computers may appear randomly, the performance level requirements for the output subsystem are statistically derived.

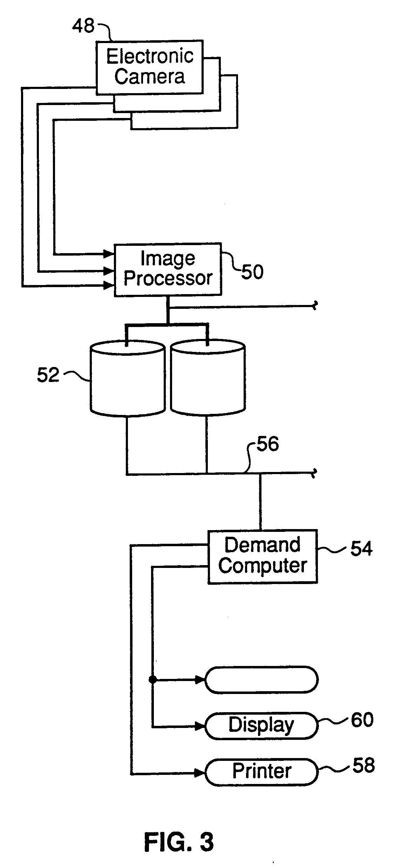

Figure 3 shows a practical implementation of such a combined real-time and demand-driven architecture. A plurality of electronic cameras 48 are connected to image processor workstations 50. External triggers would periodically cause the cameras to acquire images, which would then be downloaded to the image processor workstations for enhancement or analysis. The processed images could then be stored on traditional magnetic disk drives 52 associated with each image processor workstation.

On the output side, users wanting hard-copy prints of the images could make requests from any of a plurality of demand computers 54 (workstations or personal computers). These demand computers would read the proper images from the archive disk drives over a standard network 56, such as Ethernet or FDDI. Once read, the images could be sent to a suitable printer 58, such as a digital image thermal printer, for a hard copy. Demand computers 54 may also receive requests for an image to be displayed, in which case they might be sent to a display device 60, such as a CRT.

We have described a network-and-storage based imaging system which is composed of an image archive, processing nodes, acquisition nodes, demand nodes, and output devices. The imaging system provides a simple structure which can be expanded virtually indefinitely, and which can support a wide variety of devices within a single, common architecture. The real-time input subsystem is effectively de-coupled from the interactive, demand-driven output subsystem, so that data is not lost, and so that unnecessary delays are not encountered.

The invention has been described in detail with particular reference to preferred embodiments thereof, but it will be understood that variations and modifications can be effected within the spirit and scope of the invention.

## Claims

1. A computer network-and-storage based digital imaging architecture comprising:
an image archive;
an input subsystem of acquisition nodes and processing nodes which respond in real-time to external triggers to capture of images for input to the image archive; and
a user-interactive output subsystem of demand nodes and output devices which are demand-driven in response to user commands.

2. A computer network-and-storage based digital imaging architecture as set forth in Claim 1, further comprising:
a computing device at each of said processing and demand nodes; and
a computer network connecting all of said nodes, whereby the computing devices allow each node to interact with other nodes on the network.

3. A computer network-and-storage based digital imaging architecture as set forth in Claim 1, wherein:
the input subsystem includes image processing computer means;
and the output subsystem includes demand computer means different from the image processing computer means, whereby the image processing computer means need not be available for demand functions and is thereby available for real-time input.

4. A computer network-and-storage based digital imaging architecture as set forth in Claim 1, wherein:
the image archive comprises a plurality of memory storage devices; and
the output has access to all of said memory storage devices.

5. A computer network-and-storage based digital imaging architecture as set forth in Claim 4 wherein each acquisition mode is associated with a particular one of said memory storage devices.

6. A computer network-and-storage based digital imaging architecture as set forth in Claim 1, wherein at least one of the processing nodes is served by multiple acquisition nodes.

7. A computer network-and-storage based digital imaging architecture as set forth in Claim 1, wherein the image archive is served by multiple processing nodes.

8. A computer network-and-storage based digital imaging architecture as set forth in Claim 1, wherein a plurality of demand nodes are adapted to request image data from the image archive.

9. A computer network-and-storage based digital imaging architecture as set forth in Claim 1, wherein each demand node provides image data to multiple output devices.

10. A computer network-and-storage based digital imaging architecture as set forth in Claim 1 wherein at least some of said acquisition nodes are electronic cameras.

11. A computer network-and-storage based digital imaging architecture as set forth in Claim 1 wherein said input subsystem is adapted to acquire images at fixed intervals.

12. A computer network-and-storage based digital imaging architecture as set forth in Claim 1 wherein said input subsystem is adapted to acquire images in response to a trigger signal.

13. A computer network-and-storage based digital imaging architecture as set forth in Claim 1 wherein the image archive comprises:
a plurality of storage devices; and
a bus communication system connecting separate storage devices to each processing node, whereby (1) the storage devices are physically divided to reduce network traffic and (2) input constraints are de-coupled from output requirements.

14. A computer network-and-storage based digital imaging architecture as set forth in Claim 1 wherein the image archive comprises a plurality of storage devices, and further comprising:
a second network interconnecting a plurality of said demand nodes to the plurality of said storage devices as a single logical device so that any one of a plurality of demand nodes can access image data from any storage device, whereby the image archive serves to de-couple the real-time, trigger-driven image input system requirements from the demand-driven output requirements.
